Europäisches Patentamt

European Patent Office

Office européen des brevets

(19)

(11) Numéro de publication : **0 083 269 B1**

**FASCICULE DE BREVET EUROPÉEN**

(12)

(45) Date de publication du fascicule du brevet :
04.03.87

(51) Int. Cl.⁴ : **B 62 K 23/06**

(21) Numéro de dépôt : **82402306.3**

(22) Date de dépôt : **15.12.82**

(54) **Ensemble de manette et de collier, notamment pour cycle.**

(30) Priorité : 30.12.81 FR 8124503

(43) Date de publication de la demande :
06.07.83 Bulletin 83/27

(45) Mention de la délivrance du brevet :
04.03.87 Bulletin 87/10

(84) Etats contractants désignés :
BE DE GB IT LU NL

(56) Documents cités :
CH-A- 385 650
FR-A- 995 861
FR-A- 2 114 323
FR-A- 2 285 290
FR-A- 2 325 297
US-A- 3 982 446

(73) Titulaire : **HURET ET SES FILS Société dite:**
**60 Avenue Félix Faure**
**F-92000 Nanterre (FR)**

(72) Inventeur : **Coue, Maurice Emmanuel Louis**
**6 Résidence du Vieux Puits**
**F-78810 Feucherolles (FR)**

(74) Mandataire : **Moncheny, Michel et al**
**c/o Cabinet Lavoix 2 Place d'Estienne d'Orves**
**F-75441 Paris Cedex 09 (FR)**

## Description

La présente invention concerne les manettes d'actionnement de dérailleurs ou dispositifs analogues, utilisées notamment sur des cycles.

Dans les dispositifs connus, ces manettes sont montées sur des colliers eux-mêmes fixés sur le cadre du cycle. Le collier porte au moins une pièce soudée qui délimite une surface d'appui pour la manette et un tourillon autour duquel cette manette peut tourner. L'ensemble comprend par ailleurs une rondelle ou plaquette délimitant une pièce de butée pour la manette et pouvant constituer une butée de gaine, deux rondelles de friction, deux rondelles élastiques et un organe de serrage vissé dans le tourillon. Le nombre de pièces constituant cet ensemble est donc élevé, ce qui complique la fabrication, augmente le temps de montage, ainsi que le coût global de l'ensemble. On peut également indiquer que les colliers sont en général fixés sur le cycle au moyen d'ensembles à vis et écrous de sorte qu'étant livrés montés, ils doivent être démontés avant d'être mis en place, ce qui représente également une perte de temps.

Le brevet FR-A-2 285 290 décrit un ensemble de manette dans lequel le collier comporte une partie en saillie radiale délimitant un logement dans lequel est reçue la tête ou collerette d'une douille filetée intérieurement et qui constitue le tourillon sur lequel est montée la manette. De plus, une plaque de base ou contre-plaque entoure ladite partie en saillie et prend appui contre le collier, cette plaque de base servant elle-même de surface d'appui pour la manette et délimitant une butée de gaine. Un mécanisme à cliquet et rochet est également incorporé à cet ensemble qui est donc en fin de compte complexe, dans sa conception et sa réalisation.

Le but de l'invention est de proposer un ensemble de manette qui remédie à ces divers inconvénients et qui soit de construction simple et d'un montage particulièrement aisé.

A cet effet, l'invention a pour objet un ensemble de manette d'actionnement de dérailleur comprenant un collier portant au moins un tourillon dirigé radialement et au moins une surface d'appui à peu près perpendiculaire à l'axe du tourillon, ainsi qu'une manette montée autour de ce tourillon et contre la surface d'appui, le collier comportant, venue de matière, au moins une partie en saillie radiale qui délimite sur sa face intérieure un logement, caractérisé en ce que ledit logement reçoit une pièce formant butée de gaine et en ce que la manette est en appui contre la face extérieure de ladite partie en saillie.

Suivant d'autres caractéristiques :

ladite partie en saillie délimite au moins une butée limitant la course de la manette ;

le tourillon autour duquel la manette est montée constitue simultanément l'organe de fixation de cette dernière ;

ce tourillon est venu de matière avec le collier ;

ce tourillon est constitué par un rivet ;

il est prévu une rondelle élastique entre la surface d'appui délimitée par le collier et la face adjacente de la manette ;

la manette comporte au moins un logement dans lequel le câble d'actionnement peut être enclenché élastiquement et retenu ;

le collier est muni de moyens de fixation rapide se substituant aux vis et écrou traditionnels.

L'invention va être décrite plus en détail ci-dessous en se référant au dessin annexé donné uniquement à titre d'exemple et sur lequel :

la Figure 1 est une vue en coupe d'un ensemble de collier et de manette suivant l'invention ;

la Figure 2 est une vue en coupe suivant la ligne 2-2 de la Fig. 1 ;

la Figure 3 est une vue en élévation à plus grande échelle de la manette ;

les Figures 4 et 5 sont deux vues en élévation latérale de cette même manette ;

la Figure 6 est une vue en coupe analogue à celle de la Fig. 1 d'une variante ;

la Figure 7 représente le détail de la fixation du collier ;

les Figures 8 et 9 représentent deux organes de fixation de ce même collier ; et

la Figure 10 est une vue en élévation latérale de la pièce de fixation de la Fig. 9.

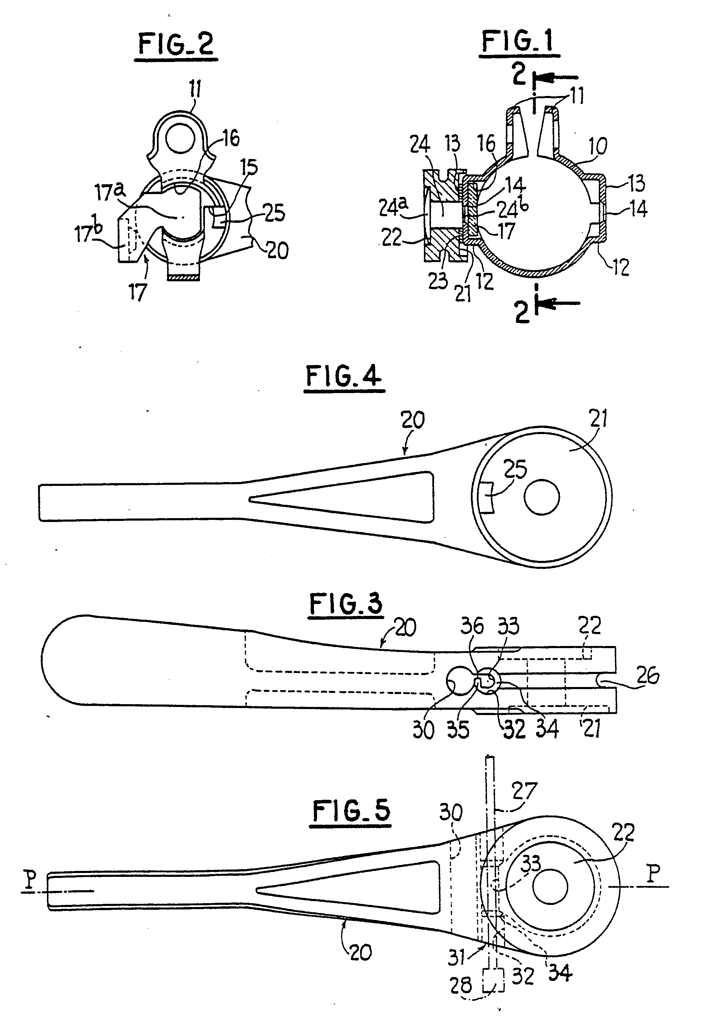

On voit sur le dessin et en particulier aux Fig. 1 et 2 un ensemble de manette, par exemple une manette d'actionnement de dérailleur pour cycle, comprenant un collier 10 sur lequel est montée une manette 20 proprement dite. Le collier est conformé de façon à délimiter d'une part, des pattes de fixation 11 pouvant être associées par exemple à des moyens classiques à vis et écrou et, d'autre part, deux parties en saillie 12 disposées à peu près à 90° par rapport aux pattes de fixation et diamétralement opposées entre elles. Chacune de ces deux saillies s'étend à peu près radialement par rapport au collier et délimite une surface d'appui 13 à peu près plane dirigée vers l'extérieur et s'étendant perpendiculairement au diamètre du collier. Cette surface d'appui est percée d'un orifice 14 centré sur ce même diamètre du collier.

Comme cela est visible sur la Fig. 2, la partie en saillie comporte un décrochement 15 qui constitue une butée limitant la course angulaire de la manette. Cette partie en saillie délimite par ailleurs sur sa face interne dirigée vers l'axe du collier un logement 16 dans lequel peut être reçue une pièce 17 ayant une forme en L dont une des branches 17a est conformée de façon à pouvoir être reçue dans le logement 16 et dont l'autre branche 17b est conformée pour servir de butée de gaine et laisser passer le câble d'actionnement.

Suivant l'invention également, la manette 20 est montée de façon très simple : cette manette réalisée par exemple en matière plastique ou autre comporte sur chacune de ses faces un chambrage 21, 22, le chambrage 21 dirigé vers le collier recevant de préférence une rondelle 23 en matériau élastique, par exemple en polyuréthanne, interposée entre le fond du chambrage et la surface d'appui du collier. Cette rondelle a par exemple une épaisseur de 4 mm à l'état libre et est comprimée jusqu'à une épaisseur d'environ 2 mm à l'assemblage. Les moyens de fixation de la manette comprennent un rivet 24 dont la tête 24a dirigée vers l'extérieur est reçue dans le chambrage 22 de la manette et dont le fût 24b est rivé derrière la face arrière de la saillie 12. Cette dernière est conformée pour que l'extrémité du rivet ne fasse pas saillie dans le logement 16 et ne gêne pas l'insertion de la pièce 17 formant butée de gaine.

La manette proprement dite va être décrite plus en détail en se référant aux Fig. 3 à 5. Cette manette comporte sur sa face dirigée vers le collier un ergot 25 destiné à coopérer avec la butée 15 du collier pour limiter son débattement angulaire. Elle comporte une gorge 26 pour le passage du câble ainsi qu'un logement de forme originale permettant le montage de la tête du câble 27 qui, de façon classique est constituée par une petite masse métallique 28 de forme à peu près cylindrique fixée à l'extrémité du câble. Le logement ménagé dans la manette comprend une première partie 30 à peu près cylindrique dont l'axe est orthogonal à celui du tourillon et dont le diamètre est légèrement supérieur à celui de la tête du câble. Cette première partie cylindrique traverse la manette de part en part et débouche à peu près tangentiellement dans un deuxième logement 31 étagé, qui comporte d'une part, une partie cylindrique 32 de diamètre légèrement supérieur à celui de la tête du câble et un passage coaxial 33 dont le diamètre est supérieur à celui du câble, mais inférieur à celui de ladite tête. Un épaulement transversal 34 est donc ménagé à la jonction de la partie 32 et du passage 33. De plus, la portion de cloison 35 qui sépare les deux logements 30 et 31 comporte un passage 36 qui s'étend également sur toute l'épaisseur de la manette et qui sur au moins une partie de sa longueur a une largeur inférieure au diamètre du câble.

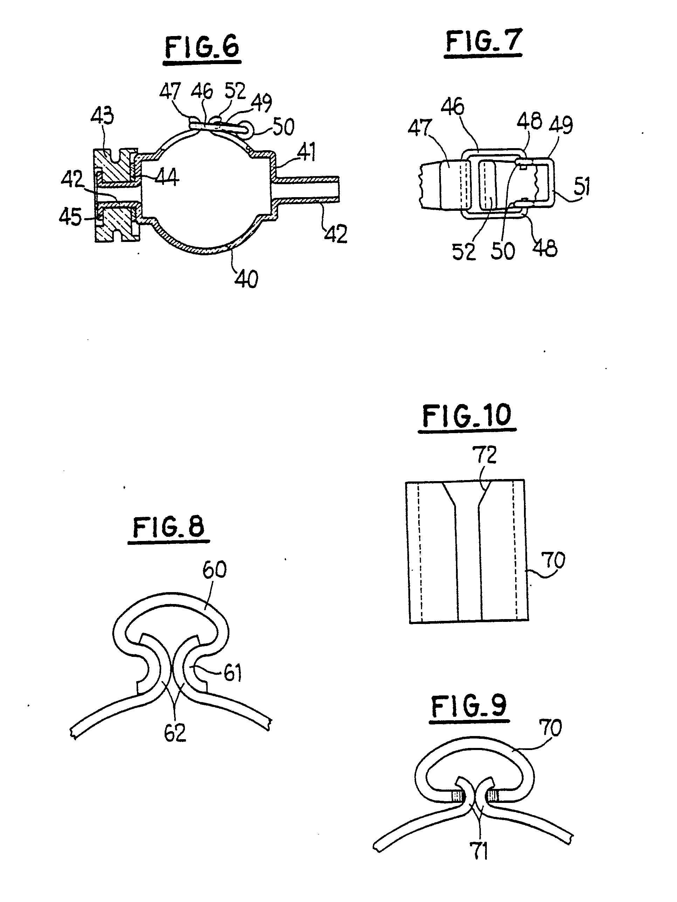

De préférence, cette partie de la manette est réalisée à peu près symétrique par rapport à un plan tel que le plan P reporté sur la Fig. 5 de sorte qu'il est prévu deux logements identiques 32 pour le câble qui peut donc être monté d'un côté ou de l'autre de la manette.

Les avantages qu'offre l'agencement que l'on vient de décrire sont les suivants :

le nombre de pièces constituant l'ensemble du collier et de la manette est très faible puisque la surface d'appui pour la manette est venue de matière avec le collier et que le tourillon autour duquel la manette peut tourner constitue simultanément l'organe de fixation de cette dernière. La seule pièce supplémentaire est ici constituée par la rondelle élastique unique 23. La pièce 17 formant butée de gaine peut être mise en place très aisément et aucune opération de soudure n'est nécessaire pour la réalisation de ce collier et de cet ensemble.

La réalisation de la manette proprement dite est également très avantageuse puisqu'il n'est pas nécessaire de monter le câble en usine lors de la fabrication de la manette et que ce câble peut donc être monté par l'utilisateur très simplement en engageant son extrémité dans le logement cylindrique 30 puis en exerçant une force suffisante en direction du deuxième logement 31 pour faire franchir au câble la cloison 35 après quoi le câble est maintenu en place et ne peut se dégager de son logement.

La Fig. 6 représente une variante de réalisation dans laquelle le collier 40 est réalisé de façon à délimiter une saillie latérale constituant non seulement une surface d'appui 41, mais également un tourillon creux 42 sur lequel est montée la manette 43. On retrouve dans cet agencement une manette identique à celle décrite précédemment ainsi qu'une rondelle élastique 44. La fixation de la manette est ici réalisée par rivetage de l'extrémité 45 du tourillon.

La fixation du collier est également modifiée. Elle est ici réalisée au moyen de deux pièces en fil métallique, la première 46 a une forme à peu près en U dont l'âme est reçue dans l'extrémité repliée 47 d'une des branches du collier et dont les extrémités libres des branches sont repliées vers l'intérieur, en 48 pour servir d'axe d'articulation à une deuxième pièce 49 également en forme d'étrier ou en U dont les extrémités sont repliées en 50 pour former des œils d'articulation sur les tourillons 48 et dont l'âme 51 coopère avec l'extrémité repliée 52 de l'autre branche du collier. En position ouverte (Fig. 7) la deuxième pièce est complètement dégagée de la branche du collier. En position de fermeture, cette deuxième pièce vient se loger dans cette extrémité repliée et assure le blocage du collier par un effet de genouillère.

Ce mode de montage est avantageux puisqu'il évite l'utilisation de vis et d'écrous qui doivent être serrés lors de la fabrication du collier puis desserrés par l'utilisateur et à nouveau serrés après montage. On évite également la perte de ces vis et écrous qui est fréquente au cours du transport.

La variante de la Fig. 8 représente une autre pièce de fixation du collier constituée par un profilé 60 en acier à ressort ayant à peu près la forme d'un oméga et qui est conformé de façon à venir en prise par ses deux branches 61 sur les deux extrémités repliées 62 d'un collier analogue à celui de la Fig. 6.

De même, dans la variante des Fig. 9 et 10 est représenté un autre organe de fixation du collier également constitué par un profilé 70 en acier à ressort et qui vient en prise sur les deux extrémités repliées 71 des branches du collier. Comme on le voit sur la Fig. 10 et comme cela peut également être prévu dans le mode de réalisation de la Fig. 8, la pièce 70 comporte une zone d'entrée élargie 72 pour faciliter sa mise en place sur le collier.

## Revendications

1. Ensemble de collier et de manette d'actionnement de dérailleur comprenant un collier (10 ; 40) portant au moins un tourillon dirigé radialement et au moins une surface d'appui à peu près perpendiculaire à l'axe du tourillon, ainsi qu'une manette (20 ; 43) montée autour de ce tourillon et contre la surface d'appui, le collier comportant, venue de matière, au moins une partie (12 ; 41, 42) en saillie radiale qui délimite sur sa face intérieure un logement (16) ; caractérisé en ce que ledit logement (16) reçoit une pièce (17) formant butée de gaine et en ce que la manette (20 ; 43) est en appui contre la face extérieure (13 ; 41) de ladite partie en saillie.

2. Ensemble suivant la revendication 1, caractérisé en ce que ladite partie en saillie (12) délimite au moins une butée (15) coopérant avec une butée complémentaire (25) de la manette (20) pour limiter le débattement angulaire de ladite manette (20).

3. Ensemble suivant la revendication 1, caractérisé en ce que le tourillon (24 ; 42) sur lequel la manette est montée constitue également l'organe de fixation de cette dernière.

4. Ensemble suivant la revendication 3, caractérisé en ce que le tourillon (42) est venu de matière avec le collier (40).

5. Ensemble suivant la revendication 3, caractérisé en ce que le tourillon (24) est constitué par un rivet dont l'extrémité est épanouie derrière ladite partie en saillie.

6. Ensemble suivant l'une quelconque des revendications 1 à 5, caractérisé en ce qu'il est prévu une rondelle unique (23 ; 44) en matériau élastique interposée entre une face d'appui de la manette et une surface d'appui du collier ou de l'organe de fixation de la manette sur le collier.

7. Ensemble suivant la revendication 1, caractérisé en ce que le collier (40) est muni de moyens de fixation rapide (46, 49 ; 60 ; 70).

8. Ensemble suivant la revendication 7, caractérisé en ce que lesdits moyens sont du type à genouillère et comprennent deux étriers (46, 49) articulés l'un sur l'autre par une de leurs extrémités et venant en prise par leurs autres extrémités sur deux extrémités repliées (47, 52) des branches du collier.

9. Ensemble suivant la revendication 7, caractérisé en ce que lesdits moyens comprennent une attache (60 ; 70) à section en C, en ou analogue, venant en prise sur deux extrémités repliées (62 ; 71) des branches du collier.

## Claims

1. A collar and actuating lever assembly for a derailleur, comprising a collar (10 ; 40) carrying at least one radially extending journal and at least one bearing surface substantially perpendicular to the axis of the journal, and a lever (20 ; 43) mounted on the journal and against the bearing surface, the collar comprising integral therewith at least one radially projecting portion (12 ; 41, 42) which defines, on an inner surface thereof, a cavity (16) characterized in that said cavity (16) receives a member (17) forming a sheath abutment and in that the lever (20 ; 43) bears against the outer surface (13 ; 41) of said projecting portion.

2. An assembly according to claim 1, wherein said projecting portion (12) defines at least an abutment (15) cooperating with a complementary abutment (25) of the lever (20) for limiting the angular travel of said lever (20).

3. An assembly according to claim 1, wherein the journal (24 ; 42) on which the lever is mounted also constitutes means for securing the lever.

4. An assembly according to claim 3, wherein the journal (42) is integral with the collar.

5. An assembly according to claim 3, wherein the journal (24) is formed by a rivet having an enlarged end portion behind said projecting portion.

6. An assembly according to any one of claims 1 to 5, wherein a single washer (23 ; 44) is provided, composed of an elastically yieldable material, interposed between a bearing surface of the lever and a bearing surface of the collar or of the means for securing the lever on the collar.

7. An assembly according to claim 1, wherein the collar (40) is provided with rapid fixing means (46, 49 ; 60 ; 70).

8. An assembly according to claim 7, wherein said means are of the toggle type and comprise two fork members (46, 49) pivoted together by one of their ends and engaging by their other ends on two formed-over end portions (47, 52) of the branches of the collar.

9. An assembly according to claim 7, wherein said means comprise a fastener (60 ; 70) having a C-$\Omega$- or like section which engages on two formed-over end portions (62 ; 71) of the branches of the collar.

## Patentansprüche

1. Anordnung einer Ringschelle und eines Handhebels zum Betätigen einer Gangschaltung, umfassend eine Ringschelle (10 ; 40), welche wenigstens einen radial ausgerichteten Lagerzapfen trägt und wenigstens eine nahezu rechtwinklig zur Achse des Lagerzapfens ausgerichtete Stützfläche aufweist, sowie umfassend einen am Lagerzapfen schwenkbar und gegen die Stützfläche anliegend gelagerten Handhebel (20, 43), wobei die Ringschelle wenigstens einen mit dieser einstückigen radialen Vorsprung (12, 41) aufweist, welcher auf seiner inneren Seite einen Aufnahmesitz (16) bildet, dadurch gekennzeichnet, daß dieser Aufnahmesitz (16) ein Teil (17) aufnimmt, welches einen Hülsenanschlag bildet und daß der Handhebel (20, 43) gegen die äußere Seite (13, 41) dieses Vorsprunges anliegt.

2. Anordnung nach Anspruch 1, dadurch gekennzeichnet, daß der Vorsprung (12) wenigstens einen mit einem komplementären Anschlag (25) des Handhebels (20) zusammenwirkenden Anschlag (15) zur Begrenzung der Schwenkbewegung des Handhebels (20) bildet.

3. Anordnung nach Anspruch 1, dadurch gekennzeichnet, daß der Lagerzapfen (24, 42) zur Schwenklagerung des Handhebels auch als Befestigungsorgan des letzteren dient.

4. Anordnung nach Anspruch 3, dadurch gekennzeichnet, daß der Lagerzapfen (42) mit der Ringschelle (40) einstückig aus einem Material ist.

5. Anordnung nach Anspruch 3, dadurch gekennzeichnet, daß der Lagerzapfen (24) aus einem Niet gebildet ist, dessen Ende hinter dem Vorsprung aufgeweitet ist.

6. Anordnung nach einem der Ansprüche 1 bis 5, dadurch gekennzeichnet, daß eine einzige Ringscheibe (23, 44) aus einem elastischen Material zwischen einer Stützfläche des Handhebels und einer Stützfläche der Ringschelle oder des Organs zur Befestigung des Handhebels an der Ringschelle vorgesehen ist.

7. Anordnung nach Anspruch 1, dadurch gekennzeichnet, daß die Ringschelle (40) mit Schnellschließmitteln (46, 49 ; 60 ; 70) versehen ist.

8. Anordnung nach Anspruch 7, dadurch gekennzeichnet, daß diese Schnellschließmittel in der Art eines Kniehebels ausgebildet sind und zwei Bügel (46, 49) umfassen, welche jeweils mit einem ihrer Enden gelenkig miteinander verbunden sind und jeweils mit ihrem anderen Ende mit den beiden umgebördelten Enden (47, 52) der Arme der Ringschelle in Eingriff gelangen.

9. Anordnung nach Anspruch 7, dadurch gekennzeichnet, daß diese Schnellschließmittel eine Schließklammer (60, 70) mit C-förmigem oder analogem Grundriß umfassen, welche in Eingriff mit den beiden umgebördelten Enden (62 ; 71) der Arme der Ringschelle gelangen.

FIG.2

FIG.1

FIG.4

FIG.3

FIG.5

## FIG.6

## FIG.7

## FIG.10

## FIG.8

## FIG.9